# EUROPEAN PATENT SPECIFICATION

(11) **EP 3 012 480 B1**
(45) Date of publication and mention of the grant of the patent: **31.05.2017**
(21) Application number: 13777298.4
(22) Date of filing: 17.06.2013
(51) Int. Cl.: F16F 9/02, B30B 15/28

(54) **GAS SPRING WITH CONTROLLED DECOMPRESSION**
GASFEDER MIT KONTROLLIERTER DRUCKENTLASTUNG
RESSORT À GAZ À DÉCOMPRESSION CONTRÔLÉE

(43) Date of publication of application: 27.04.2016
(73) Proprietor: Azol-Gas, S. L., 01015 Vitoria, Álava (ES)
(72) Inventor: DOMÍNGUEZ CHAMORRO, Javier, E-01015 Vitoria-Álava (ES); RAMOS DÍAZ DE GUEREÑU, Edorta, E-01015 Vitoria-Álava (ES); ALEJOS PÉREZ, Óscar, E-01015 Vitoria-Álava (ES)
(74) Representative: Pons
(86) International application number: PCT/ES2013/070392
(87) International publication number: WO 2014/202799

(56) References cited:
- EP-A1- 1 420 187
- DE-A1- 3 438 301
- DE-A1-102006 005 459
- US-A- 2 756 048

## Description

### OBJECT OF THE INVENTION

The present invention may be included in the technical field of controlled pressure relief systems in cylinders working with a compressible fluid. Particularly, the present invention relates to a gas spring which enables the accomplishment of controlled pressure relief in case of piston overstroke.

### BACKGROUND OF THE INVENTION

One of the major problems related to gas springs is that there can be damage caused to the spring cylinder if the piston nominal stroke is exceeded. This damage may be caused by the rod striking against the lower face of the cylinder inner chamber. In this case, deformation of the rod and the cylinder bottom can occur.

Another possible consequence of the piston overstroke is the possible striking of the pushing element on the outer upper part of the cylinder body. In this case, a deformation of the cylinder may occur, severely influencing on its resistive capability and shortening its fatigue life.

These effects may seriously damage the cylinder and even render it useless. Therefore, there is a need for the development of systems which enable the gas to come out from the cylinder in a controlled manner. There are some patents known from the state of the art which set forth different solutions to the above described problem.

A compressible fluid device is known, for example, which comprises a safety means with at least a detachable or a deformable area suitable for breaking or deforming during assembly, so as to make the security means inaccessible or fixed, at least as long as it has not been struck by the piston and the compression chamber has not been bled from the compressible fluid inside thereof.

Likewise, gas springs are known which have a safety valve located in the chamber wall within the spring, and comprising a through bore and an inner sealing part. The bore is drilled radially in the chamber wall, and in the outlet inside the chamber it comprises a seat on which the sealing part rests, being said part made of a non-deformable material and having a greater diameter than the seat. Such a device is disclosed for example in EP1420187A1 It has also been described in the state of the art an energy accumulating piston-cylinder device, in which the bleeding means of the cylinder inner chamber comprise a duct which goes axially through the piston and discharges in the open air. It has a seal which avoids communication between the chamber filled with fluid and the open air. It also comprises an element provided so that, when the piston is inserted in a predetermined position, it can break the seal, thus communicating the chamber with the open air through the described duct.

Other procedures for pressure relief in a piston-cylinder type device, consist of making an indentation inside the chamber, in such a way that the chamber casing is deformed, bending outwardly to reduce contact pressure in case a failure in the piston operation occurs.

### DESCRIPTION OF THE INVENTION

The present invention disclosures a gas spring having controlled pressure relief. The spring disclosed is of the type comprising an inner chamber, in which there is a compressible gas on which a piston moving in said chamber along its nominal stroke operates. The key point of the present invention is that if a misuse of the gas spring occurs and it exceeds its nominal stroke, then a controlled discharge of the chamber is produced, which takes place during the upward piston stroke and without breaking any gas spring element.

There is an emergency outlet for the gas arranged at the bottom of the cylinder inner chamber, and a safety element is placed therein. The safety element is intended to couple to the gas emergency outlet during usual operation of the spring, ensuring tightness of the inner chamber. The moment the piston exceeds its nominal stroke due to failure in the spring operation, it continues with its downward stroke until it couples to the safety element. The coupling is produced when the piston and the safety element contact each other, and in the subsequent upward piston stroke the piston pulls the safety element along with it.

When the piston pulls the safety element along, the emergency outlet is cleared. Thus, during the upward piston stroke the gas from the inner chamber comes out, thereby producing a controlled pressure relief of the spring of the invention.

The gas spring comprises first coupling elements arranged in the piston and second coupling elements arranged in the safety element.

The key features of the gas spring described are that it allows a controlled gas pressure relief, none of the gas spring elements break during operation of the spring and the gas pressure relief is carried out during the upward piston stroke.

In an exemplary embodiment of the present invention the gas spring is a nitrogen gas spring.

### DESCRIPTION OF THE DRAWINGS

To implement the present description and in order to provide a better understanding of the characteristics of the invention, according to a preferred embodiment thereof, a set of drawings is attached as part of this description, with an illustrative but not limitative purpose, which represents the following:

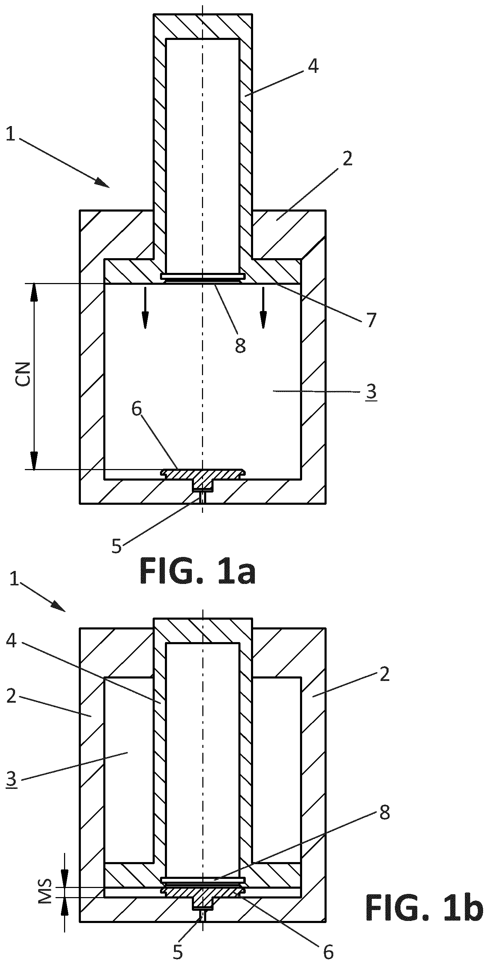

Figure 1a.- It shows a view of the gas spring with the piston in its initial position, contacting the upper surface of the inner chamber.
Figure 1b.- It shows a view of the gas spring with the piston at the end of its nominal stroke.

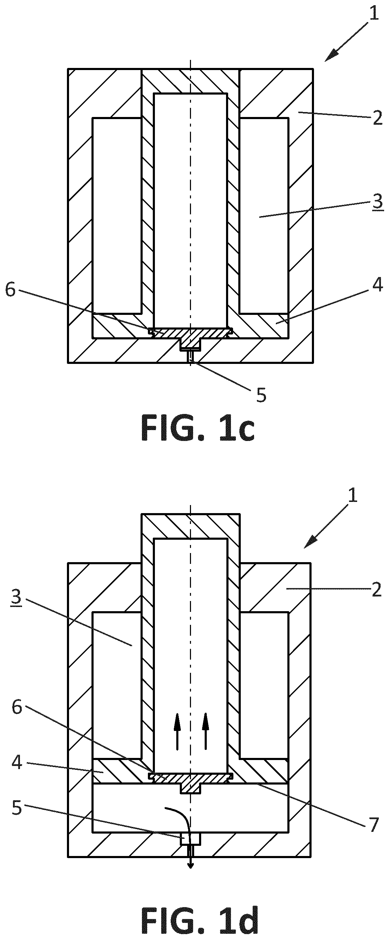

Figure 1c.- It shows a view of the gas spring with the piston having exceeded its nominal stroke and coupled to the safety element.
Figure 1d.- It shows a view of the piston during its upward stroke with the safety element already coupled.

### PREFERRED EMBODIMENT OF THE INVENTION

The present invention discloses a gas spring having a controlled pressure relief. The pressure relief is carried out during the upward piston stroke of the spring, when said piston has exceeded its nominal stroke.

The gas spring (1) disclosed comprises the essential elements of the gas springs known from the state of the art, such as a cylinder (2) having an inner chamber (3) in which a piston (4) moves along, intended to compress a compressible gas which is also located inside the chamber. There is an emergency outlet (5) arranged at the bottom of the inner chamber (3), communicating the interior of the chamber with the exterior of the gas spring (1).

During usual operation of the gas spring (1) the piston (4) moves along its nominal stroke (CN), as it may be observed for example in figures 1 and 2. A failure in the operation of the gas spring can cause the piston (4) to exceed its nominal stroke (CN), in which case damage can be caused to the cylinder (2) and the piston (4) itself. The gas spring (1) disclosed is designed to avoid damage when this situation takes place. As long as the gas spring is working properly, the safety element (6) located in the gas emergency outlet (5) guarantees the tightness of the inner chamber (3).

The piston (4) comprises first coupling elements in its lower surface (7), and the safety element (6) comprises second coupling elements intended to couple to the first coupling elements of the piston (4). An example of this situation can be observed in figure 3, in which the piston (4) has exceeded its nominal stroke and the safety element (6) has coupled to said piston (4).

The first coupling elements couple to the second coupling elements when the piston (4) exceeds its nominal stroke. Thus, the piston (4) pulls the safety element (6) along with it during its subsequent upward stroke, clearing the emergency outlet (5) and allowing the gas to come out from the inner chamber (3). This is how the controlled pressure relief of the gas spring (1) of the invention is produced.

In an embodiment of the invention, the piston (4) comprises a cavity (8), defined in its lower surface. Said cavity (8) is where the first coupling elements are located in.

The first coupling means and the second coupling means are coupled to each other by means of different technical solutions.

In an embodiment of the invention, the first coupling elements comprise a perimetral groove, which can or cannot be arranged inside the cavity (8), and the second coupling elements comprise a perimetral flange intended to be introduced in said perimetral groove. It is also an object of the present invention a gas spring with a reverse embodiment, that is, wherein the first coupling elements consist of a perimetral flange and the second coupling elements consist of a perimetral groove.

In another embodiment, the first coupling elements consist of claws and the second coupling elements consist of notches intended to receive said claws. It is also an object of the present invention a gas spring in which the first coupling elements are notches and the second coupling elements are claws intended to be introduced in said notches.

When the piston (4) comprises a cavity (8) in its lower surface (7), the cavity itself can be the first coupling element, and the second coupling element, in that case, is the upper section of the safety element (6) itself (the part that is left outside the gas emergency outlet (5)). In this case, the cavity diameter (8) is greater than the diameter of the safety element (6) upper section, in such a way that when the piston (4) contacts the safety element (6) the coupling elements are coupled by interference fit.

In another embodiment of the invention, the gas spring (1) further comprises a flexible intermediate piece, which is preferably a spring ring, preferably arranged in the first coupling element. Particularly, said flexible piece is placed in the first coupling element when it is a perimetral groove. In this embodiment the second coupling element is also a perimetral groove, and it is intended to accommodate the flexible piece. Said flexible intermediate piece could also be coupled to the perimetral groove of the second coupling element, and in this embodiment the first coupling element is also a perimetral groove intended to receive the flexible piece.

The thickness of the upper section of the safety element (6) (the upper section is the part of the safety element (6) which is left outside the emergency outlet (5)), coincides with the safety margin (MS) in the gas spring of the invention. This safety margin (MS) enables the piston (4) to have a few millimetres of additional movement in the case it has exceeded its nominal stroke. As it may be observed in figure 3, in the present invention the safety margin (MS) is used to accomplish the attachment between the piston (4) and the safety element (6) located at the cylinder bottom (2).

In order to perform the controlled pressure relief of the gas spring, no break in any gas spring part is produced, but instead the safety element (6) is coupled to the piston (4) and is pulled along during its upward stroke, as it may be observed for example in figure 4.

Therefore, when the upward stroke of the piston (4) begins, the uplifting of the safety element (6) which is now coupled to the piston (4) also begins, so that the emergency outlet (5) is cleared. During the upward stroke of the piston (4), the gas from the inner chamber (3) is discharged through said emergency outlet (5). The gas is drained in a controlled manner and damage of the spring is avoided.

## Claims

1. Gas spring of the type comprising:
- a cylinder (2), with an inner chamber (3) in which there is a compressible gas, and
- an emergency gas outlet (5), located at the bottom of the inner chamber (3) which communicates said inner chamber (3) with the exterior of the gas spring (1),
- a piston (4) which moves along the inner chamber (3) operating on the gas,
- a safety element (6) located in the emergency outlet (5) which keeps tightness in the inner chamber (3) during usual operation of the spring, on which the piston travels within its nominal stroke (CN),
and which is **characterized in that** it comprises:
- the piston (4) comprises first coupling elements in its lower surface (7)
- the safety element (6) comprises second coupling elements intended to be coupled to the first coupling elements of the piston (4), when the piston (4) exceeds its nominal stroke (CN), in such a way that the piston (4) pulls the safety element (6) along during its upward stroke, thus clearing the emergency outlet (5), allowing the gas to come out of the inner chamber (3).

2. Gas spring according to claim 1, **characterized in that** the first coupling elements are located in a cavity (8) of the piston (4) defined in the piston lower surface (7).

3. Gas spring according to claim 1, **characterized in that** the first coupling elements consist of a perimetral groove and the second coupling elements consist of a perimetral flange intended to be introduced in said perimetral groove.

4. Gas spring according to claim 1, **characterized in that** the first coupling elements consist of a perimetral groove within which an annular piece is coupled and the second coupling elements consist of another perimetral groove intended to accommodate said annular piece.

5. Gas spring according to claim 1, **characterized in that** the second coupling elements consist of a perimetral groove in which an annular piece is coupled and the first coupling elements consist of another perimetral groove intended to accommodate said annular piece.

6. Gas spring according to one of the claims 4 or 5, **characterized in that** the annular piece is flexible.

7. Gas spring according to claim 1, **characterized in that** the first coupling elements are claws and the second coupling elements are notches intended to receive said claws.

## Patentansprüche

1. Gasfeder von der Art umfassend:
- einen Zylinder (2) mit einer inneren Kammer (3), in welcher ein komprimierbares Gas vorhanden ist, und
- ein Notgasauslass (5), der auf der Unterseite der inneren Kammer (3) liegt, welcher die innere Kammer (3) mit dem Äußeren der Gasfeder (1) verbindet,
- einen Kolben (4), welcher sich entlang der inneren Kammer (3) bewegt, wobei er auf das Gas einwirkt,
- ein Sicherheitselement (6), das in dem Notauslass (5) liegt, welches die Dichtigkeit in der inneren Kammer (3) während des gewöhnlichen Betriebs der Feder aufrechterhält, auf welchem sich der Kolben innerhalb seines Nennhubs (CN) fortbewegt,
und welche **dadurch gekennzeichnet ist, dass** sie Folgendes umfasst:
- der Kolben (4) umfasst erste Kopplungselemente auf seiner unteren Fläche (7)
- das Sicherheitselement (6) umfasst zweite Kopplungselemente, die mit den ersten Kopplungselementen des Kolbens (4) gekoppelt werden sollen, wenn der Kolben (4) seinen Nennhub (CN) überschreitet, so dass der Kolben (4) das Sicherheitselement (6) während seines Aufwärtshubs mitzieht, wodurch der Notauslass (5) freigeräumt wird, was es dem Gas ermöglicht, aus der inneren Kammer (3) heraus zu kommen.

2. Gasfeder nach Anspruch 1, **dadurch gekennzeichnet, dass** die ersten Kopplungselemente in einem Hohlraum (8) des Kolbens (4) liegen, der in der unteren Kolbenfläche (7) definiert ist.

3. Gasfeder nach Anspruch 1, **dadurch gekennzeichnet, dass** die ersten Kopplungselemente aus einer Umfangsnut bestehen und die zweiten Kopplungselemente aus einem Umfangsflansch, der in die Umfangsnut eingeführt werden soll, bestehen.

4. Gasfeder nach Anspruch 1, **dadurch gekennzeichnet, dass** die ersten Kopplungselemente aus einer Umfangsnut bestehen, innerhalb von welcher ein kreisförmiges Teil gekoppelt ist, und die zweiten Kopplungselemente aus einer anderen Umfangsnut bestehen, die das ringförmige Teil aufnehmen soll.

5. Gasfeder nach Anspruch 1, **dadurch gekennzeichnet, dass** die zweiten Kopplungselemente aus einer Umfangsnut bestehen, in welcher ein ringförmiges Teil gekoppelt ist, und die ersten Kopplungselemente aus einer anderen Umfangsnut bestehen, die das ringförmige Teil aufnehmen soll.

6. Gasfeder nach einem der Ansprüche 4 oder 5, **dadurch gekennzeichnet, dass** das ringförmige Teil biegsam ist.

7. Gasfeder nach Anspruch 1, **dadurch gekennzeichnet, dass** die ersten Kopplungselemente Greifer sind und die zweiten Kopplungselemente Aussparungen sind, die die Greifer aufnehmen sollen.

## Revendications

1. Ressort à gaz du type comprenant :
- un vérin (2), avec une chambre interne (3) dans laquelle se trouve un gaz compressible,
et
- une sortie de gaz d'urgence (5), située sur la partie inférieure de la chambre interne (3) qui communique ladite chambre interne (3) avec l'extérieur du ressort à gaz (1),
- un piston (4) qui se déplace le long de la chambre interne (3) opérant sur le gaz,
- un élément de sécurité (6) situé dans la sortie d'urgence (5) qui maintient l'étanchéité dans la chambre interne (3) pendant l'opération normale du ressort, sur lequel le piston est mobile dans sa course nominale (CN),
et qui est **caractérisé en ce qu'**il comprend :
- le piston (4) comprend des premiers éléments de couplage dans sa surface inférieure (7)
- l'élément de sécurité (6) comprend des deuxièmes éléments de couplage destinés à être couplés aux premiers éléments de couplage du piston (4), lorsque le piston (4) dépasse sa course nominale (CN), de telle façon que le piston (4) tire l'élément de sécurité (6) pendant sa course vers le haut, dégageant ainsi la sortie d'urgence (5), permettant au gaz de sortir de la chambre interne (3).

2. Ressort à gaz selon la revendication 1, **caractérisé en ce que** les premiers éléments de couplage sont situés dans une cavité (8) du piston (4) définie dans la surface inférieure (7) du piston.

3. Ressort à gaz selon la revendication 1, **caractérisé en ce que** les premiers éléments de couplage consistent en une rainure périphérique et les deuxièmes éléments de couplage consistent en une bride périphérique destinée à être introduite dans ladite rainure périphérique.

4. Ressort à gaz selon la revendication 1, **caractérisé en ce que** les premiers éléments de couplage consistent en une rainure périphérique dans laquelle une pièce annulaire est couplée et les deuxièmes éléments de couplage consistent en une autre rainure périphérique destinée à loger ladite pièce annulaire.

5. Ressort à gaz selon la revendication 1, **caractérisé en ce que** les deuxièmes éléments de couplage consistent en une rainure périphérique dans laquelle une pièce annulaire est couplée et les premiers éléments de couplage consistent en une autre rainure périphérique destinée à loger ladite pièce annulaire.

6. Ressort à gaz selon l'une des revendications 4 ou 5, **caractérisé en ce que** la pièce annulaire est flexible.

7. Ressort à gaz selon la revendication 1, **caractérisé en ce que** les premiers éléments de couplage sont des griffes et les deuxièmes éléments de couplage sont des encoches destinées à recevoir lesdites griffes.
